# EUROPEAN PATENT APPLICATION

(11) **EP 4 691 892 A1**
(43) Date of publication of application: **11.02.2026**
(21) Application number: 24905215.0
(22) Date of filing: 16.12.2024
(51) Int. Cl.: B62J 11/02, B62K 19/42, B60C 25/00

(54) **PUMP AND ACCESSORY ASSEMBLY INTEGRATED INTO A BICYCLE SEATPOST**

(30) Priority: 22.12.2023 BR 102023027228
(71) Applicant: Ieda, Alexandre Roberto, 86010-610 Londrina PR (BR); Silva, Josmar Da, 86039-090 Londrina PR (BR)
(72) Inventor: Ieda, Alexandre Roberto, 86010-610 Londrina PR (BR); Silva, Josmar Da, 86039-090 Londrina PR (BR)
(74) Representative: Torner, Juncosa I Associats, SL
(86) International application number: PCT/BR2024/050584
(87) International publication number: WO 2025/129307

(57) **Abstract**

The present patent relates to a pump and accessory assembly integrated into a bicycle seatpost, which, according to its features, enables the formation of a pump and accessory assembly having its own specific mechanical structure in a format that allows it to be carried inside the seatpost (A) of a bicycle saddle (B), comprising a pump (2) and an external capsule (3) that is fitted to a pumping hose (C) and houses a kit for maintaining and repairing bicycle inner tubes and tyres, including glue, patches, sandpaper, and spatulas. The invention aims to completely optimise manual tyre inflation and repair procedures for bicycles and the like in a wide range of environments, together with storage entirely inside the bicycle frame, allowing for rapid and effective tyre repair.

## Description

The present patent refers to the technical field of bicycle accessories in general, more specifically to a pump and accessories set integrated into the bicycle seatpost, which, according to its general characteristics, has as its basic principle to provide the formation of a pump and accessories set in a specific mechanical structure in a format that allows its portability inside the bicycle saddle seatpost and based on a pump and an external capsule next to the pumping hose that holds a maintenance/repair kit for inner tubes and bicycle tires containing glue, patches, sandpaper and spatulas, in order to enable, in an extremely practical, safe and economical way, a complete optimization in the manual procedures for inflating and repairing inner tubes and bicycle tires and the like in the most diverse types of places, as well as its perfect storage inside the bicycle frame (seatpost), combined with quick and effective tire repair.

With a specific design and format and easy access for better adaptation and safety of users, characteristics of practicality in handling and functionality, very affordable costs and, due to its general characteristics and dimensions, easily adaptable to a wide range of bicycles, pumps, accessories, places and users in general, regardless of the characteristics they may present.

Bicycle tire inflation pumps, widely known for their current state of the art, are indispensable tools for cycling, whether for leisure or competitions on diverse terrains. Stores in specific bags or holders that are usually attached directly to the external parts of bicycles, manual air pumps are essential equipment that are part of the safety items for cyclists of all types, whether they are riding on trails, roads or in urban areas.

The air pump is a light and compact device that compresses air to inflate different types of tires by converting mechanical energy into compressed air energy, that is, its basic objective is to increase the air pressure in tires so that they are more rigid and full, as well as suitable for use on bicycles, ensuring that there is always a solution available for filling bicycle tires and inner tubes with compressed air.

Bicycle saddles are one of the three main points of contact between users and bicycles, and it is on saddles that users rest or sit while using bicycles.

The seatposts widely known in the current state of the art are tubes into which the bicycle saddle fits, and this, in turn, is fixed to the bicycle frame, that is, the seatpost is a metal tube that is fixed directly to the upper part of the saddle and to the bicycle frame at the lower end, so as to provide cyclists with full safety, balance and comfort. It should be noted that seatposts come in different sizes and are made from various materials.

Seatposts and bicycle seat supports have become increasingly important for cyclists in terms of performance and comfort, because bicycle seatposts are components that absorb impact and promote ergonomic positioning (which generates comfort and performance) for maximum use when cycling on any type of road or in urban areas.

However, it should be noted that, despite being widely used for all kinds of bicycles, the storage and/or coupling of pumps and repair accessories has become an everyday obstacle for cyclists, mainly because they are additional baggage and directly affect cyclists' performance, as they create a significant amount of volume around the bicycle frame and interfere with the cyclist's line of action.

In view of this scenario, it was noted that it would be convenient to develop devices and/or equipment for inflating and repairing inner tubes and tires, such as accessories for manual bicycle tire repair, which would enable perfect, practical and safe bicycle tire and inner tube repair without compromising the cyclist's performance, that is, that would optimize the way equipment for bicycle tire and inner tube repair procedures is transported.

Thus, the model presented herein aims to provide cyclists, whether recreational or competitive, with a set of tire and inner tube repair accessories integrated directly into the bicycle, which, through its structural design, is capable of providing a new concept for storing these accessories.

In an extensive analysis of the literature, in order to establish the state of the art in force in relation to pumps, pump supports and accessories for repairing bicycle tires, primarily arranged integrated into the bicycle frame, object of this patent, no documents relevant to the state of the art were described that relate to the specific object claimed, that is, a portable pump and accessories set packed inside the bicycle saddle seatpost with a compartment in the pumping hose that can accommodate a repair kit containing glue, patches, sandpaper and spatulas, or an external capsule or receptacle attached to the end of the pumping hose.

Thus, the patent in question is characterized by combining components and processes in a differentiated design to meet the various requirements the nature of its use demands, namely, manual repairs to inner tubes and bicycle tires. This design guarantees a set of pump and accessories integrated into the bicycle seatpost of great efficiency, functionality, resistance, durability, safety, versatility, practicality, precision and economy due to the excellent technical qualities added, which provides advantages and improvements in the portability procedures of manual repair kits for inner tubes and bicycle tires, with internal storage in the bicycle's frame, whose general characteristics differ from other forms and models known in the current state of the art.

The present patent consists of the use of a modern, efficient, safe and functional pump and accessories set integrated into the bicycle seatpost comprising a set of properly incorporated mechanical and cycling solutions, comprising a complete and differentiated pump and accessories set with an exclusive design, excellent finishing details and its own characteristics, which incorporates its own specific mechanical structure, of high durability and resistance, cylindrical in shape and containing a perfectly integrated and symmetrically arranged pump as an element for inflating bicycle tires and structuring the pump and accessories set, and an external capsule as an element for storing repair accessories and integrating into the pumping hose of the pump, in order to enable the formation of a single, complete and safe set, whose shapes and internal and external arrangements allow perfect adaptation to a wide range of bicycle seatposts in general, being specially designed for this purpose.

Thus, the general design of the present pump and accessories set integrated into the bicycle seatpost, object of this patent, is based entirely on its simple, robust structuring with a minimum of components and extremely simplified, safe and optimized operation that is also very practical to manufacture and maintain, in order to generate a practical and efficient pump and accessories set based on a pump with an external capsule attached to the free end of its pumping hose, which has an internal compartment for storing accessories for repairing inner tubes and bicycle tires, such as patches, glue, sandpaper and support tools, and this entire set is fitted along the inside of the bicycle seatpost.

More specifically, the pump and accessories set is based on a maintenance kit for bicycle tires and inner tubes, which is compartmentalized inside the bicycle seatpost, representing an important improvement in how the pump and manual accessories for bicycle repairs are carried, as it molds and internalizes them within an existing compartment on bicycles: the seatpost.

In this context, it can be concluded that this practical and safe technical solution to an important technical problem for cyclists has been developed, based on the way of carrying a pump and repair accessories in a more discreet way and with better physical and aerodynamic advantages, with a shape that allows it to be carried within the bicycle saddle seatpost, prioritizing the cycling performance of users and avoiding extra volumes near the outer parts of bicycles.

The present set of pumps and accessories is based on the application of components and processes in a differentiated design, without, however, achieving a high degree of sophistication or complexity, making it possible to solve some of the main drawbacks of the other shapes and models known in the current state of the art and used in the procedures for inflating and repairing inner tubes and bicycle tires that operate in a working range in which traditional forms and/or models have disadvantages of use due to the inconveniences of portability and transport issues related to the requirement of carrying extra volumes fixed in positions outside the bicycle or transported with the cyclist, causing extra luggage, aerodynamic drag, and visual pollution to the bicycle's structural image, generating certain obstacles to transport, use and application, which may compromise performance, or even cause losses, accidents or deterioration due to exposure, and thus, it can be considered to have low versatility and precision, generating insecurity and low performance, as well as extra work and inconvenient volume.

The objectives, advantages, and other important characteristics of the patent in question are more easily understood when read together with the attached figures, in which:

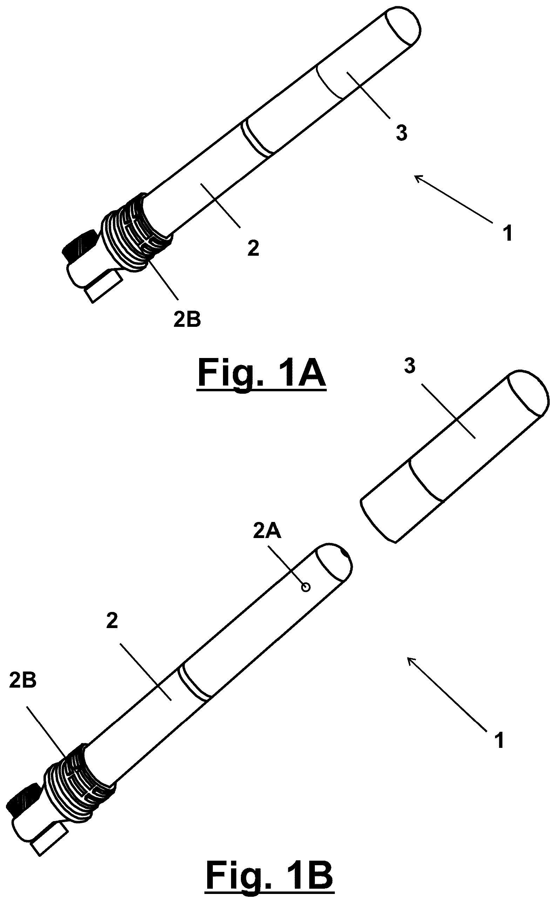

Figure 1A is a perspective view of the pump and accessories set integrated into the bicycle seatpost.
Figure 1B is an exploded perspective view of the pump and accessories set integrated into the bicycle seatpost.

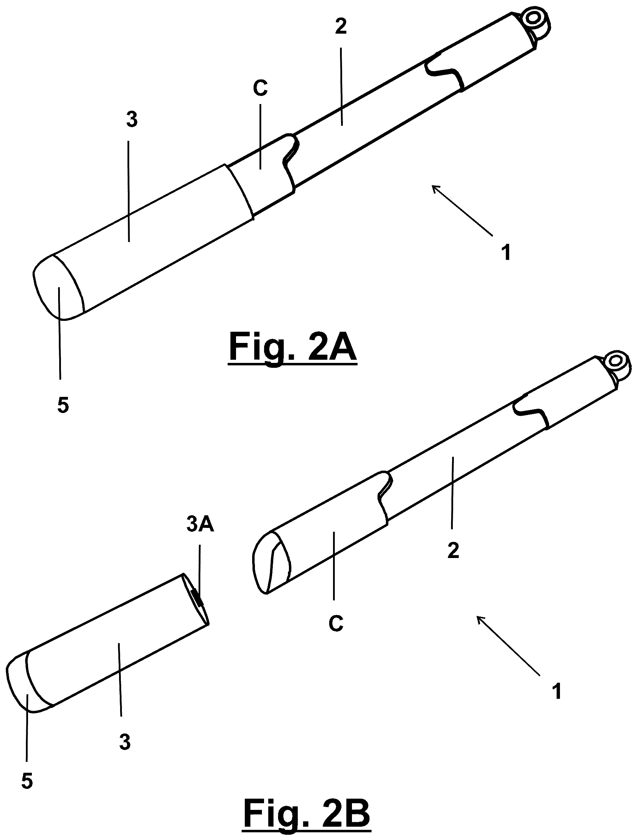

Figure 2A is a perspective view of the pump and accessories set integrated into the bicycle seatpost in another pump configuration.
Figure 2B is an exploded perspective view of the pump and accessories set integrated into the bicycle seatpost in another pump configuration.

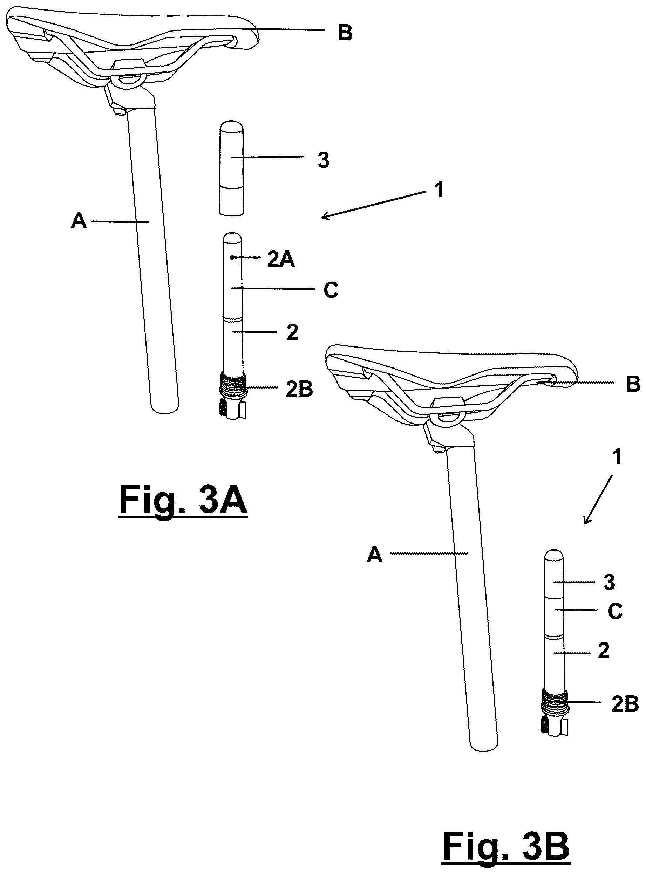

Figure 3A is a perspective view of the assembly of the pump and accessories set integrated into the bicycle seatpost -step 1 assemble.
Figure 3B is a perspective view of the assembly of the pump and accessories set integrated into the bicycle seatpost -step 2 position.

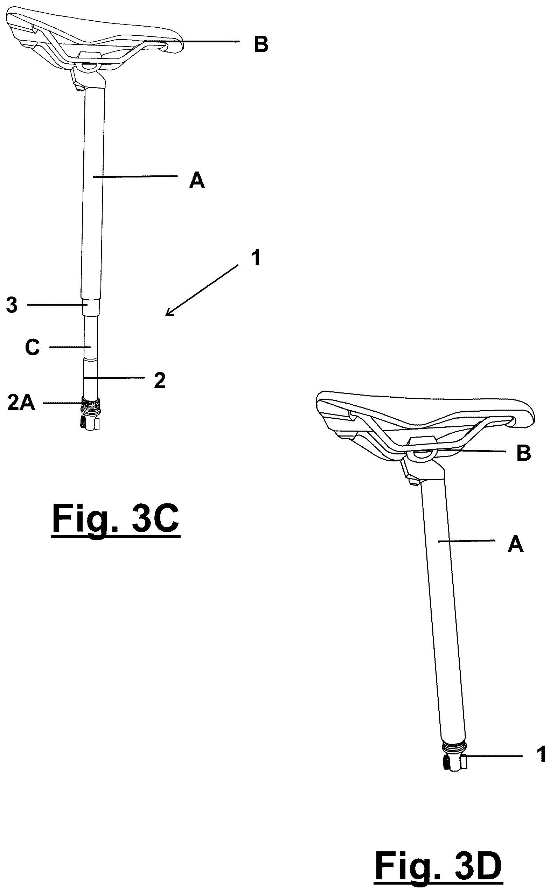

Figure 3C is a perspective view of the assembly of the pump and accessories set integrated into the bicycle seatpost -step 3 attach.
Figure 3D is a perspective view of the assembly of the pump and accessories set integrated into the bicycle seatpost - step 4 fit.

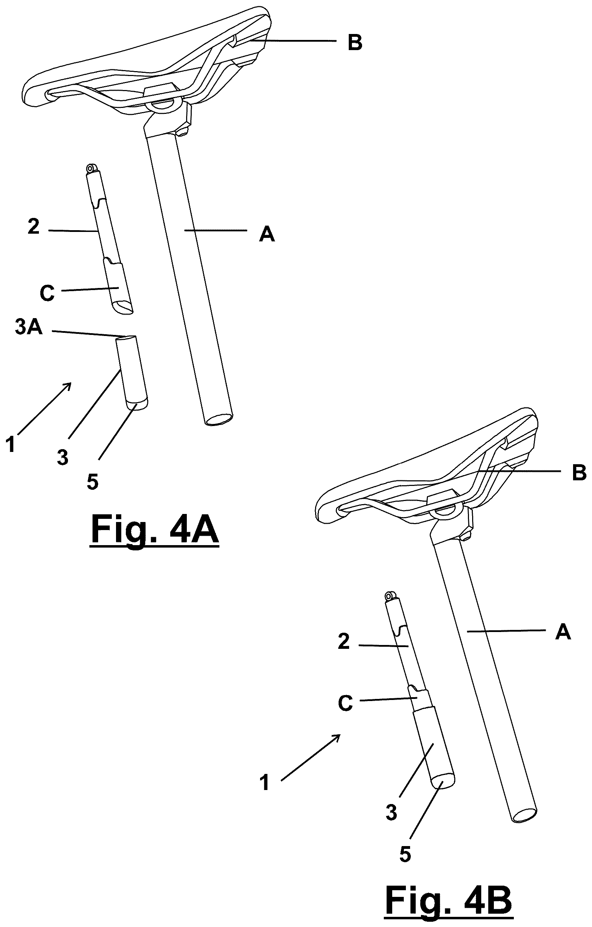

Figure 4A is a perspective view of the assembly of the pump and accessories set integrated into the bicycle seatpost -step 1 assemble.
Figure 4B is a perspective view of the assembly of the pump and accessories set integrated into the bicycle seatpost -step 2 attach.

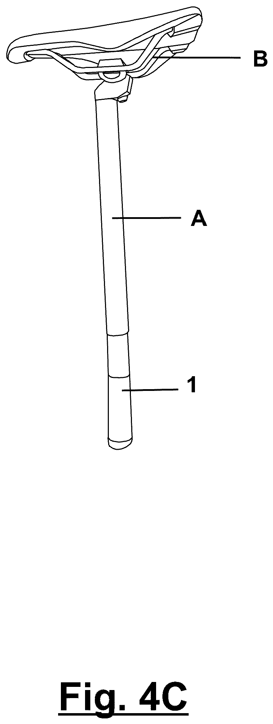

Figure 4C is a perspective view of the assembly of the pump and accessories set integrated into the bicycle seatpost -step 3 fit.

As can be inferred from the attached figures, which illustrate and integrate this descriptive report of the patent for "Pump and Accessories Set Integrated into Bicycle Seatpost", Figure (1A) provides a general overview of the complete pump and accessories set (1) which has its own characteristics and incorporates its own specific mechanical structure, as well as internal and external shapes and arrangements that can adapt to a wide range of cylindrical seatposts (A) for bicycle saddles (B) in general and containing a cylindrical pump (2) perfectly integrated and arranged within the pump and accessories set (1) and symmetrically positioned along the pump's length and having an external attachment device (2A) arranged at the end of the pumping hose (C) of the pump (2) for attaching the external capsule (3) to the pump (2), and an external attachment device (2B) arranged at the outer end of the pump (2) opposite the pumping hose (C) for attaching the pump and accessories set (1) inside the seatpost (A) of the bicycle saddle (B); and an external capsule (3) that is cylindrical and hollowed out at one end, symmetrically aligned and coupled by its hollowed part at the end of the pumping hose (C) of the pump (2) and having an internal attachment device (3A) arranged at the end of the hollowed part and aligned with the external attachment device (2A) of the pump (2) for attaching the external capsule (3) to the pumping hose (C), as well as having manual repair accessories inside, such as patches, glue, sandpaper and support tools; and, the pump and accessories set (1) being fully coupled/fitted symmetrically along the inside of the seatpost (A) of the bicycle saddle (B).

The Pump and Accessories Set Integrated into the Bicycle Seatpost, according to the needs of the application, can comprise an external capsule (3), cylindrical in shape, which has a hollowed part arranged along its entire length and a cap (5) arranged symmetrically at the free end opposite the coupling/fitting in the pump (2), thus allowing access to manual repair accessories without the need to detach/uncouple the external capsule (3) from the pump (2).

The Pump and Accessories Set Integrated into the Bicycle Seatpost, according to the needs of the application, can comprise a single cylindrical module in which the pump (2) has an internal compartment in its pumping hose (C), instead of an external capsule (3), which holds a tire and inner tube repair kit containing glue, patches, sandpaper and spatulas to help assemble and disassemble tires.

Still on the format of pump models that meet the claim of this innovation in pump coupling (2), external capsule (3) and repair kit for bicycle tires and inner tubes, the pumps can be mechanical, electronic or gas.

The application of the Pump and Accessories Set Integrated into the Bicycle Seatpost is based on its perfect mechanical structuring, which integrates a pump (2) and an external capsule containing manual accessories for bicycle tire repair into a single cylindrical module that is fully integrated into the inside of the bicycle seatpost (A) located beneath the bicycle saddle (B). Initially, all the manual repair accessories (3) are stored optimally inside the outer capsule (3). The external capsule (3) is then attached to the end of the pumping hose (C) of the pump (2) through its internal hollowed part to form a single cylindrical set. The pump and accessories set (1) is then attached by sliding along the inside of the bicycle saddle's (B) seatpost (A). Finally, the seatpost (A) is fitted to the correct position on the bicycle frame.

When carrying out manual repairs to bicycle tires and the like, all components must be disassembled in reverse order to that used for assembly, in order to have the pump (2) and manual repair accessories fully at hand.

As the Pump and Accessories Set Integrated into the Bicycle Seatpost has its components fully integrated with each other, nothing comes off and has nothing to break or bend, a high level of performance and efficiency is achieved, combined with high durability and absolute safety. After being fully integrated with each other and the inner part of the bicycle seatpost (A) of the bicycle saddle (B), the components are cohesive, thus preventing them from coming loose on their own when using the bicycle, making the set fully available for access, for use in inflation and repairs of bicycle tires. In this way, the pump and accessories set (1) can be used without concern of any kind, especially regarding the portability, durability, and safety of its components, in addition to the safety of users.

By the present set described as Repair kit for inner tubes and tires integrated into the seatpost as bicycle accessories and the like, it is estimated that it can be well received by bicycle users in general, as the pump and accessories set integrated into the bicycle seatpost has numerous advantages, such as: invisible and internal coupling to the bicycle; safety, reliability and agility in application; good yield and performance in its application due to its general design; high comfort, convenience, safety and practicality for users; affordable costs, enabling an excellent cost/benefit ratio; practical and safe for users for a perfect and direct adaptation to the most diverse types of seatposts (A) of bicycle saddles (B); high operational precision and the certainty of having a pump and accessories set (1) that fully meets the current legislation and standards and the basic conditions necessary for its application in its entirety.

All these attributes allow to classify the pump and accessories set integrated into the bicycle seatpost as a totally versatile, efficient, practical and safe means for carrying out a wide range of routine filling and manual repair procedures on the most diverse types of inner tubes and tires for a wide range of bicycles, in the most diverse types of places and by the most diverse types of users, regardless of their general characteristics, being also very easy to apply and handle, combined with great performance and excellent general characteristics; however, it is not limited, at any moment, to the representations described herein and must be understood in the broadest sense, that is, it is not limited to the specific form revealed and other similar forms are also included within the claimed scope.

## Claims

1. "PUMP AND ACCESSORIES SET INTEGRATED INTO BICYCLE SEATPOST", **characterized in that** it comprises a cylindrical structure containing integrated with each other a cylindrical pump (2) symmetrically arranged along the length of the pump and accessories set (1) and having an external attachment device (2A) arranged at the end of the pumping hose (C) of the pump (2) for attaching the external capsule (3) to the pump (2), and an external attachment device (2B) arranged at the external end of the pump (2) opposite the pumping hose (C) for attaching the pump and accessories set (1) inside the seatpost (A) of the bicycle saddle (B); and an external capsule (3) cylindrical and hollowed out at one end, symmetrically aligned and coupled by its hollowed part at the end of the pumping hose (C) of the pump (2) and having an internal attachment device (3A) arranged at the end of the hollowed part and aligned with the external attachment device (2A) of the pump (2) for attaching the external capsule (3) to the pumping hose (C), as well as having manual repair accessories inside, such as patches, glue, sandpaper and support tools; and, the pump and accessories set (1) being fully coupled/fitted symmetrically to the inside of the bicycle saddle's (B) seatpost (A).

2. "PUMP AND ACCESSORIES SET INTEGRATED INTO BICYCLE SEATPOST", according to claim 1 and **characterized in that** it comprises an external capsule (3), cylindrical in shape, hollowed along its entire length, with a cap (5) symmetrically arranged at the free end of the hollowed part opposite the coupling/fitting on the pump (2).

3. "PUMP AND ACCESSORIES SET INTEGRATED INTO BICYCLE SEATPOST", according to claim 1 and **characterized in that** it comprises a single cylindrical module in which the pump (2) has an internal compartment in its pumping hose (C) housing the tire and inner tube repair kit containing glue, patches, sandpaper and spatulas to help assemble and disassemble tires.
